(19) **Europäisches Patentamt / European Patent Office / Office européen des brevets**

(11) **EP 4 524 609 A1**

(12) **EUROPEAN PATENT APPLICATION**
published in accordance with Art. 153(4) EPC

(43) Date of publication:
**19.03.2025 Bulletin 2025/12**

(21) Application number: **23803355.9**

(22) Date of filing: **18.04.2023**

(51) International Patent Classification (IPC):
**G01S 7/481** (2006.01)

(52) Cooperative Patent Classification (CPC):
**G01S 7/481; G01S 7/497**

(86) International application number:
**PCT/JP2023/015417**

(87) International publication number:
**WO 2023/218873 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.05.2022 JP 2022077654**

(71) Applicant: **Sony Semiconductor Solutions Corporation**
**Atsugi-shi, Kanagawa 243-0014 (JP)**

(72) Inventor: **SANO Yuta**
**Atsugi-shi, Kanagawa 243-0014 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **RANGING DEVICE**

(57) This disclosure provides a distance measuring apparatus that is capable of improving the performance of distance measurement even with a light source whose polarization is unstable. A distance measuring apparatus (1) embodying the disclosure includes a light source (11) having a plurality of light emitting elements [VCSEL] (110), a first optical component [first non-polarizing beam splitter] (13) forming, from source light (L1) emitted from at least one of the plurality of light emitting elements, first incident light (L10) incident on an object (100) targeted for distance measurement and first reflected light (L11) from the first incident light reflected by the object, in such a manner that the first incident light and the first reflected light are coaxial with each other, a second optical component [mirror] (14) forming, from the source light (L1), second incident light (L20) incident on the object and second reflected light (L21) from the second incident light reflected by the object, in such a manner that the optical axis of the second incident light and that of the second reflected light are different from and intersect with each other; and a light receiving section (16) receiving the first reflected light and the second reflected light and measuring the distance to the object in reference to the amount of the received light.

FIG.1

EP 4 524 609 A1

## Description

[Technical Field]

The present disclosure relates to a distance measuring apparatus.

[Background Art]

A LiDAR (Light Detection and Ranging) apparatus is known as an apparatus that measures the distance to an object. LiDAR involves emitting a laser beam to the object targeted for distance measurement and receiving reflected light from the object to measure the distance to the object targeted for distance measurement. For the distance measuring apparatuses operating on LiDAR principles, it is desired that the optical axis of light incident on the object targeted for distance measurement be aligned with the optical axis of the light reflected by the object. When the incident light and the reflected light are not coaxial with each other, there is an increased possibility that the reflected light is not incident on detection pixels in the case where the object is positioned at a short distance, for example. This raises concerns about the performance of distance measurement being worsened.

In view of the above, techniques have been proposed to arrange optical components such as a polarization beam splitter between the light source and the object for distance measurement in order to align the optical axis of incident light with that of reflected light for use in distance measurement.

[Citation List]

[Patent Literature]

[PTL 1]
Japanese Patent Laid-open No. 2018-91630

[Summary]

[Technical Problem]

In existing technology, however, it is presupposed that the direction of a linearly polarized laser beam as a light source is stabilized. For this reason, in the case where the light source includes a plurality of vertical resonator surface emission lasers (Vertical Cavity Surface Emitting Laser; VCSEL), for example, the use of the vertical resonators tends to make the VCSEL setup symmetrical relative to the optical axis and to thereby destabilize the direction of polarization. Also, attempts to widen an opening area to increase VCSEL output can likely lead to multi-mode oscillation. This further destabilizes the polarizing direction. As a result of this, distance measuring performance can become insufficient.

The present disclosure hence provides a distance measuring apparatus capable of improving its distance measuring performance where the light source tends to destabilize the direction of polarization.

[Solution to Problem]

According to one embodiment of the present disclosure, there is provided a distance measuring apparatus including a light source configured to have a plurality of light emitting elements, a first optical component configured to form, from source light emitted from at least one of the plurality of light emitting elements, first incident light incident on an object targeted for distance measurement and first reflected light from the first incident light reflected by the object, in such a manner that the first incident light and the first reflected light are coaxial with each other, a second optical component configured to form, from the source light, second incident light incident on the object and second reflected light from the second incident light reflected by the object, in such a manner that the optical axis of the second incident light and the optical axis of the second reflected light are different from and intersect with each other, and a light receiving section configured to receive the first reflected light and the second reflected light and measure the distance to the object in reference to the amount of the received light.

Preferably, the first optical component may be a non-polarizing beam splitter splitting the source light into two beams of light, the second optical component may be a mirror totally reflecting one of the two beams of light that transmits through the non-polarizing beam splitter, the first incident light may be one of the two beams of light that is reflected by the non-polarizing beam splitter, and the second incident light may be the light that transmits through the non-polarizing beam splitter and is totally reflected by the mirror.

Preferably, the transmittance of the non-polarizing beam splitter may be set to be larger than the reflectance ratio thereof.

Preferably, the distance measuring apparatus may further include a control section configured to drive the mirror in reference to at least either a result of detecting the speed of a vehicle or a result of detecting a surrounding environment of the vehicle.

Preferably, the control section may set a specific distance in reference to the result of the detection to drive the mirror in such a manner that an angle between the first incident light and the second incident light is adjusted to an angle set in reference to the specific distance.

Preferably, the first optical component may be a first non-polarizing beam splitter splitting the source light into two beams of light, the second optical component may be a second non-polarizing beam splitter splitting one of the two beams of light that transmits through the first non-polarizing beam splitter into another two beams of light, the first incident light may be one of the two beams of light that is reflected by the first non-polarizing beam splitter, and the second incident light may be one of the other two beams of light that is reflected by the second non-polarizing beam splitter. The distance measuring apparatus may further include a light detector configured to detect one of the other two beams of light that transmits through the second non-polarizing beam splitter and a control section configured to detect a failure of the light source, in reference to the quantity of the light detected by the light detector.

Preferably, the reflectance ratio of the second non-polarizing beam splitter may be set to be higher than the transmittance thereof.

Preferably, the second optical component may be a first non-polarizing beam splitter splitting the source light into two beams of light, the first optical component may be a second non-polarizing beam splitter splitting one of the two beams of light that is reflected by the first non-polarizing beam splitter into another two beams of light, the first incident light may be one of the other two beams of light that is reflected by the second non-polarizing beam splitter, and the second incident light may be one of the two beams of light that transmits through the first non-polarizing beam splitter. The distance measuring apparatus may further include a mirror configured to totally reflect one of the other two beams of light that transmits through the second non-polarizing beam splitter.

Preferably, third incident light totally reflected by the mirror may be incident on the object and reflected by the object to become third reflected light ready to be received by the light receiving section, and the optical axis of the third incident light may be in parallel with the optical axis of the first incident light.

Preferably, the reflectance ratio of the first non-polarizing beam splitter may be set to be higher than the transmittance thereof, and the reflectance ratio of the second non-polarizing beam splitter may be set to be lower than the transmittance thereof.

Preferably, the light receiving section may receive either the second reflected light or the third reflected light depending on the distance.

Preferably, the object may be a mobile body. In a case where the object is positioned at a specific distance, the light receiving section may receive the first reflected light and the second reflected light. In a case where the object is moved from the distance measuring apparatus to a position more distant than the specific distance, the light receiving section may receive the first reflected light and the third reflected light.

Preferably, the light source may be arranged in such a manner that the optical axis of the second incident light is in parallel with the optical axis of the first incident light.

Preferably, the second optical component may be a first non-polarizing beam splitter splitting the source light into two beams of light, the first optical component may be a second non-polarizing beam splitter splitting one of the two beams of light that is reflected by the first non-polarizing beam splitter into another two beams of light, the first incident light may be one of the other two beams of light that is reflected by the second non-polarizing beam splitter, and the second incident light may be one of the two beams of light that transmits through the first non-polarizing beam splitter. The distance measuring apparatus may further include a reflecting plate configured to partially reflect one of the other two beams of light that transmits through the second non-polarizing beam splitter, a light detector configured to detect the light transmitting through the reflecting plate, and a control section configured to detect a failure of the light source and a failure of the light receiving section, in reference to the quantity of the light detected by the light detector and the amount of the light received by the light receiving section.

Preferably, the control section may determine that the light source has failed in a case where the quantity of the light is smaller than a predetermined reference value. The control section may further determine that the light receiving section has failed in a case where the quantity of the light is equal to or larger than the reference value and where the amount of the received light is smaller than a predetermined threshold value.

[Brief Description of Drawings]

   [FIG. 1]

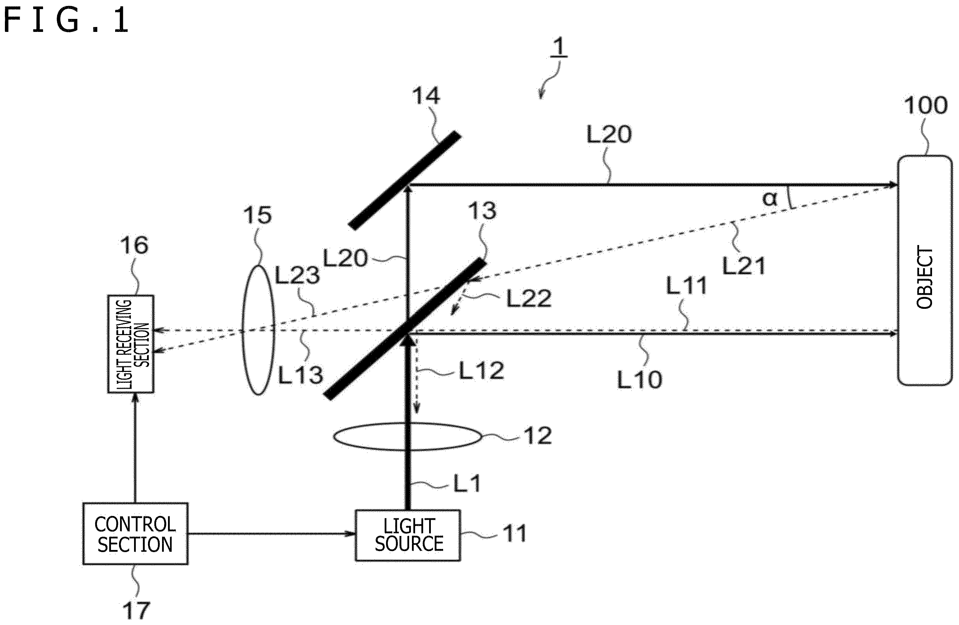

FIG. 1 is a schematic view depicting a configuration of a distance measuring apparatus as a first embodiment.

[FIG. 2]

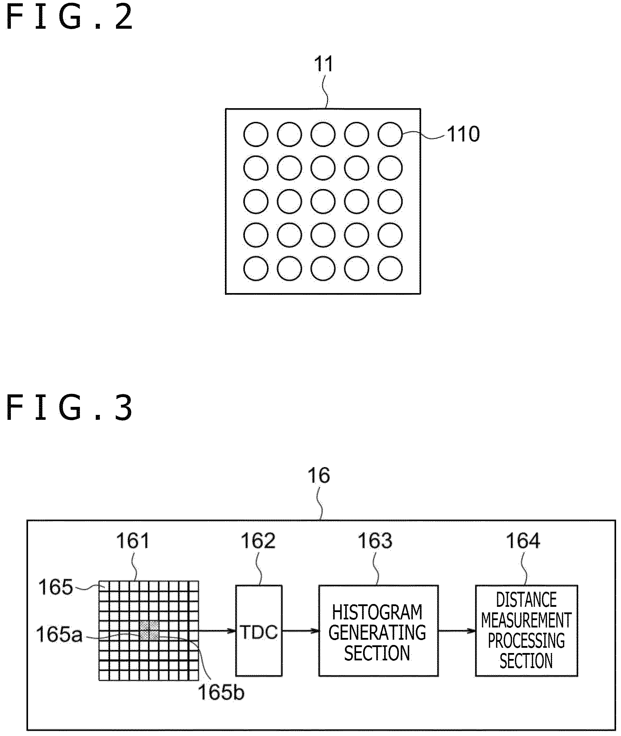

FIG. 2 is a front view of a light source.

[FIG. 3]

FIG. 3 is a block diagram depicting a schematic configuration of a light receiving section.

[FIG. 4]

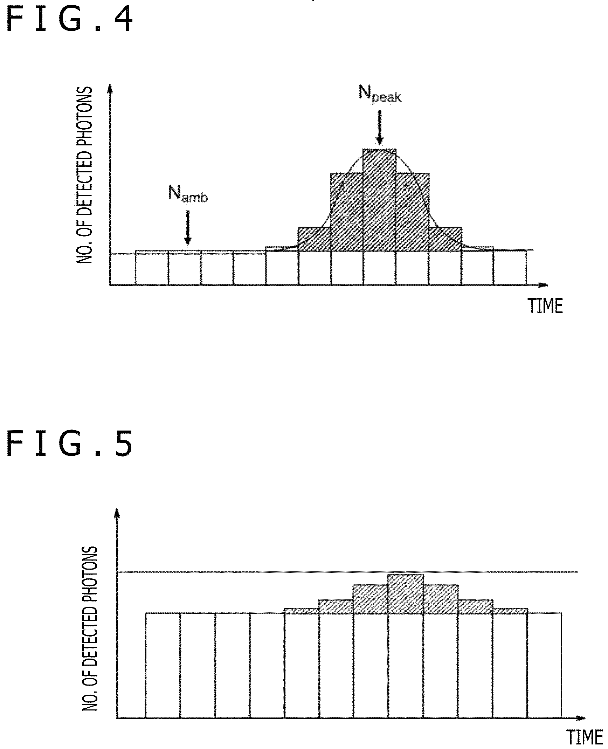

FIG. 4 is a graphic representation depicting an exemplary histogram generated by a histogram generating section.

[FIG. 5]

FIG. 5 is a graphic representation explanatory of relations between the F value of a light receiving lens and a histogram.

[FIG. 6]

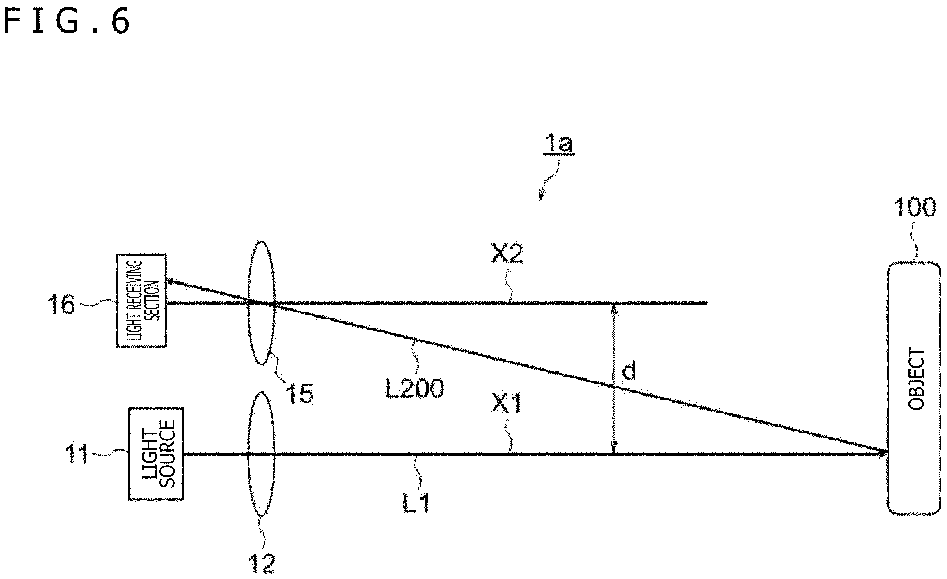

FIG. 6 is a schematic view depicting the configuration of a distance measuring apparatus as a comparative example.

[FIG. 7]

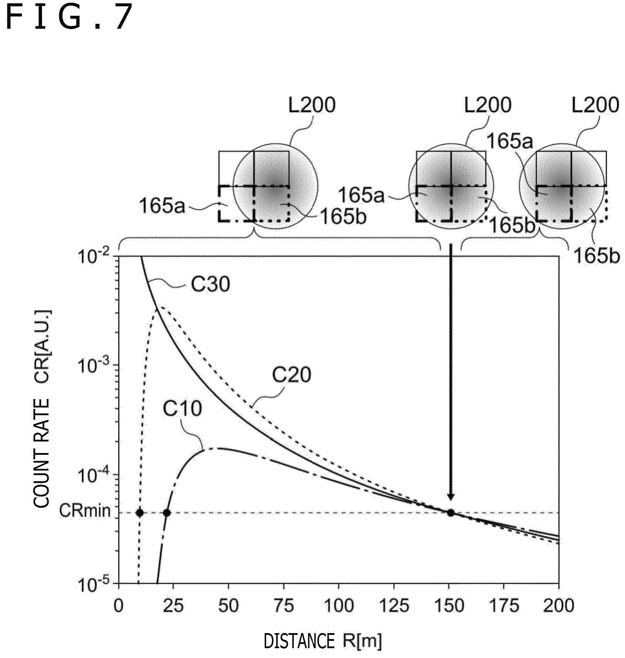

FIG. 7 is a graphic representation depicting distance measurement characteristics of the distance measuring apparatus as the comparative example.

[FIG. 8A]

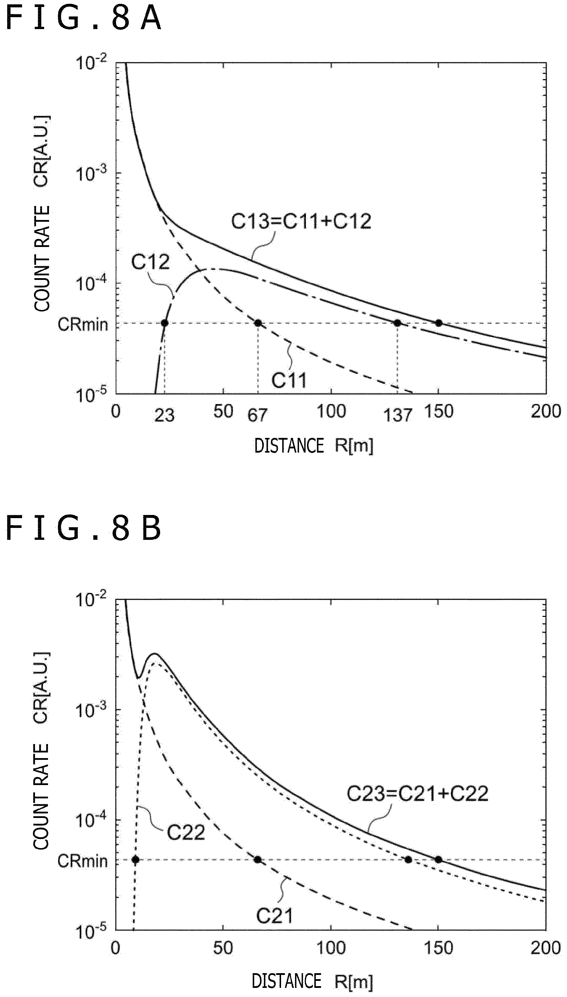

FIG. 8A is a graphic representation depicting the distance measurement characteristics of a first light detecting pixel of the first embodiment.

[FIG. 8B]

FIG. 8B is a graphic representation depicting the distance measurement characteristics of a second light detecting pixel of the first embodiment.

[FIG. 9]

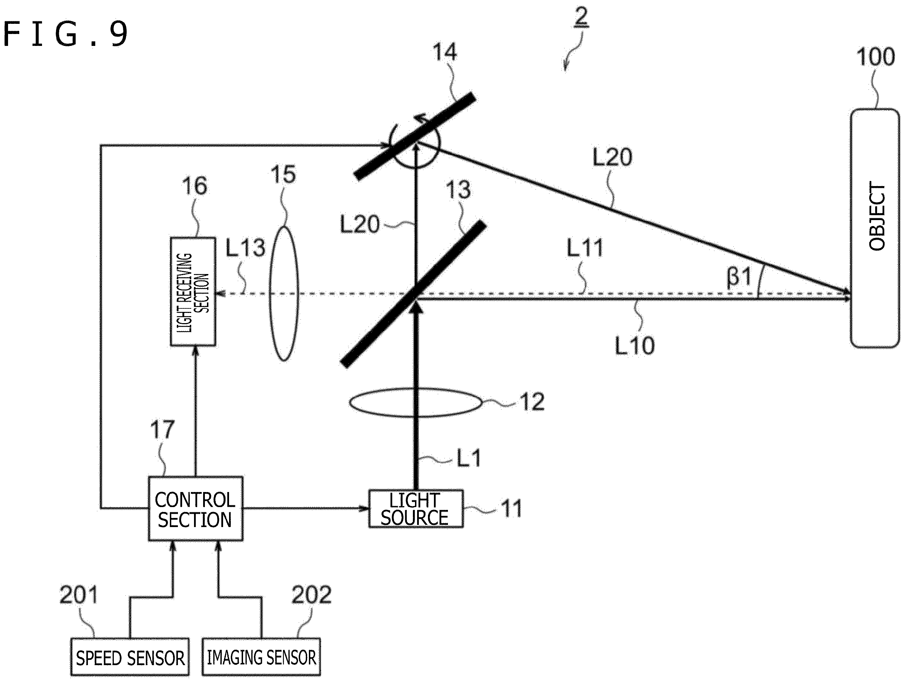

FIG. 9 is a schematic view depicting the configuration of a distance measuring apparatus as a second embodiment.

[FIG. 10]

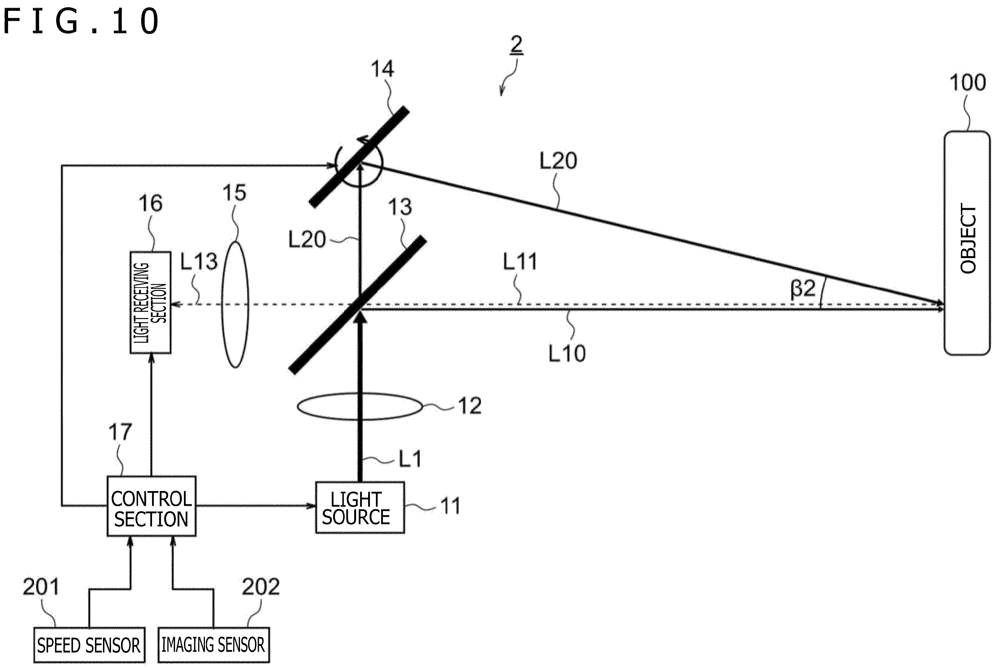

FIG. 10 is a schematic view depicting a case where alignment distance is set to be long.

[FIG. 11A]

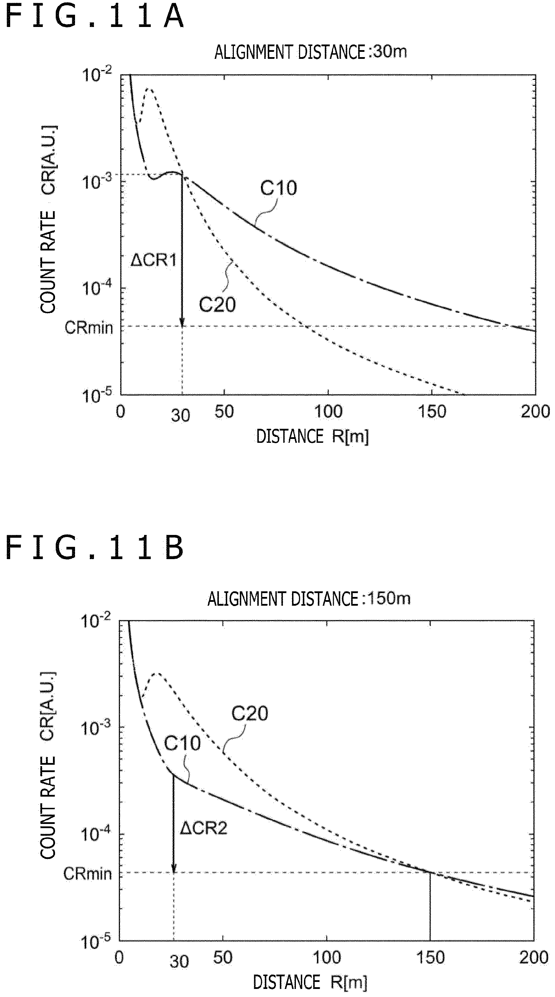

FIG. 11A is a graphic representation of a count rate characteristic of light detecting pixels in a case where the alignment distance is set to 30 m.

[FIG. 11B]

FIG. 11B is a graphic representation of the count rate characteristic of light detecting pixels in a case where the alignment distance is set to 150 m.

[FIG. 12]

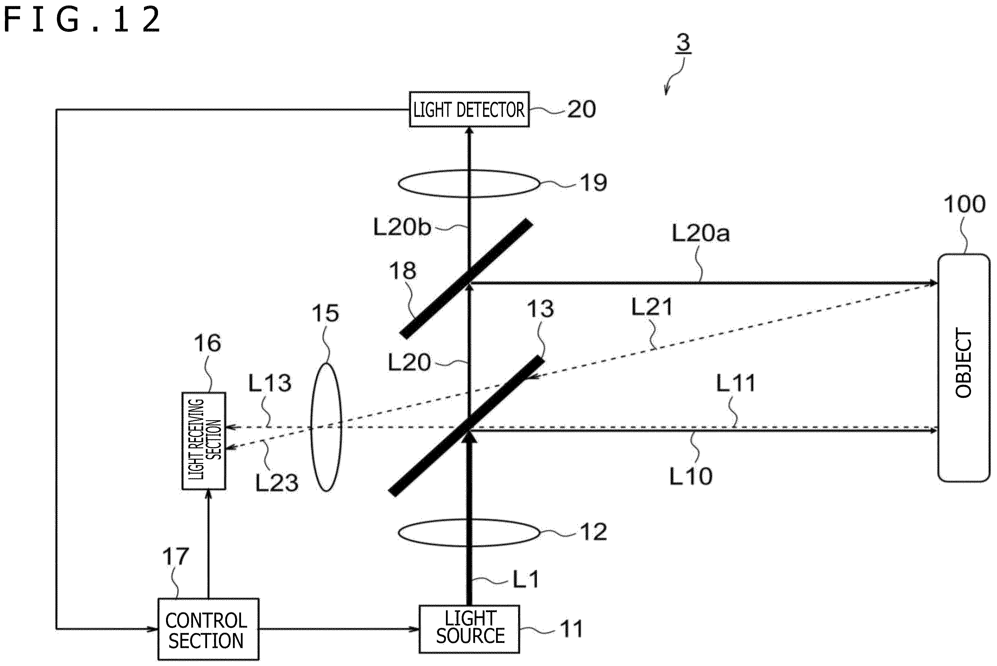

FIG. 12 is a schematic view depicting the configuration of a distance measuring apparatus as a third embodiment.

[FIG. 13]

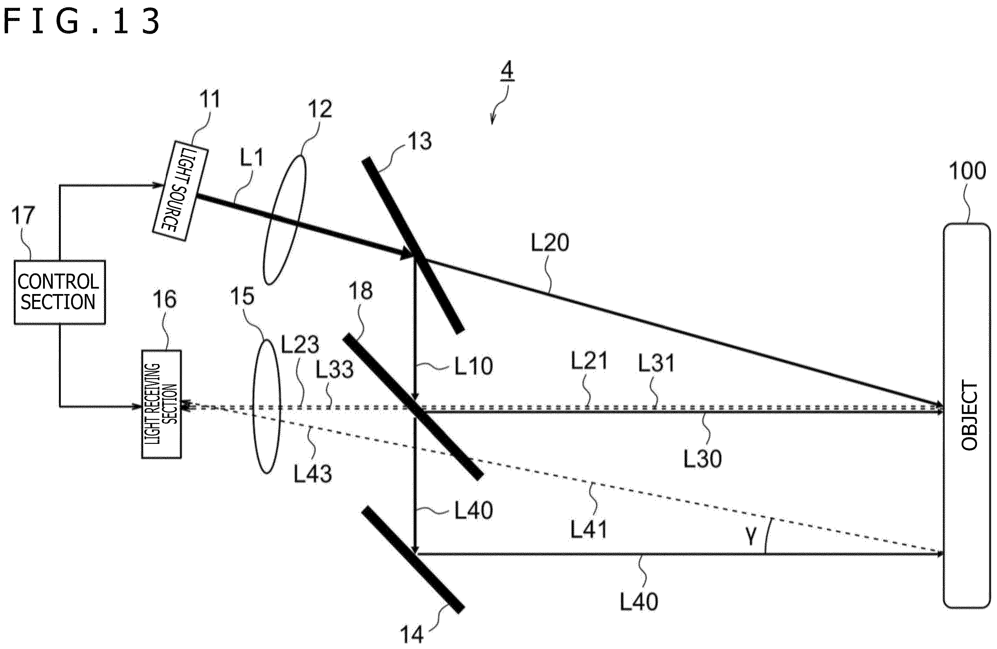

FIG. 13 is a schematic view depicting the configuration of a distance measuring apparatus as a fourth embodiment.

[FIG. 14]

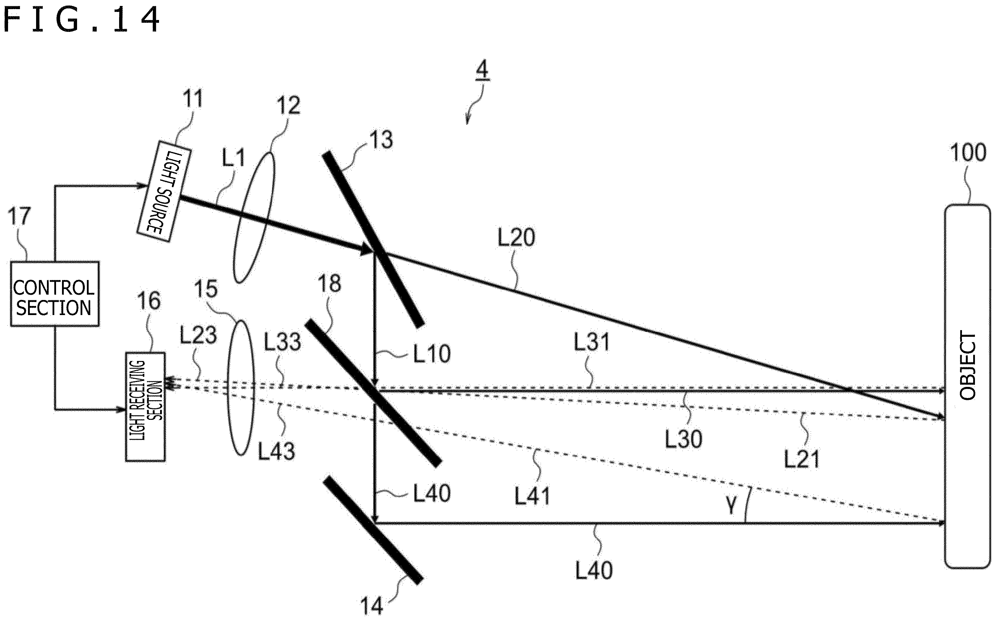

FIG. 14 is a schematic view depicting the state in which the object targeted for distance measurement by the distance measuring apparatus of the fourth embodiment is moved.

[FIG. 15]

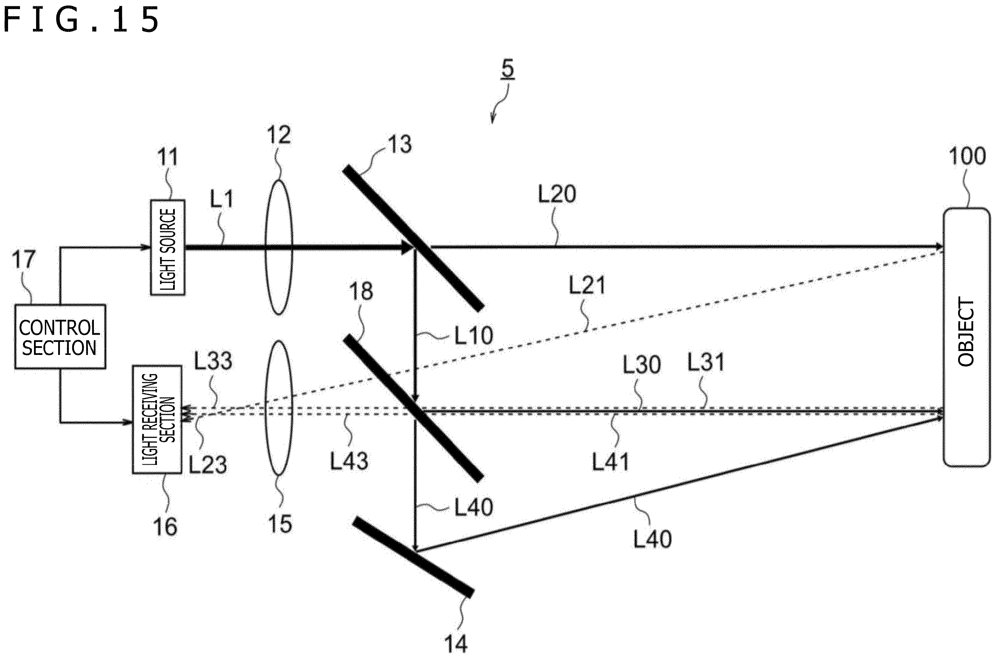

FIG. 15 is a schematic view depicting the configuration of a distance measuring apparatus as a fifth embodiment.

[FIG. 16]

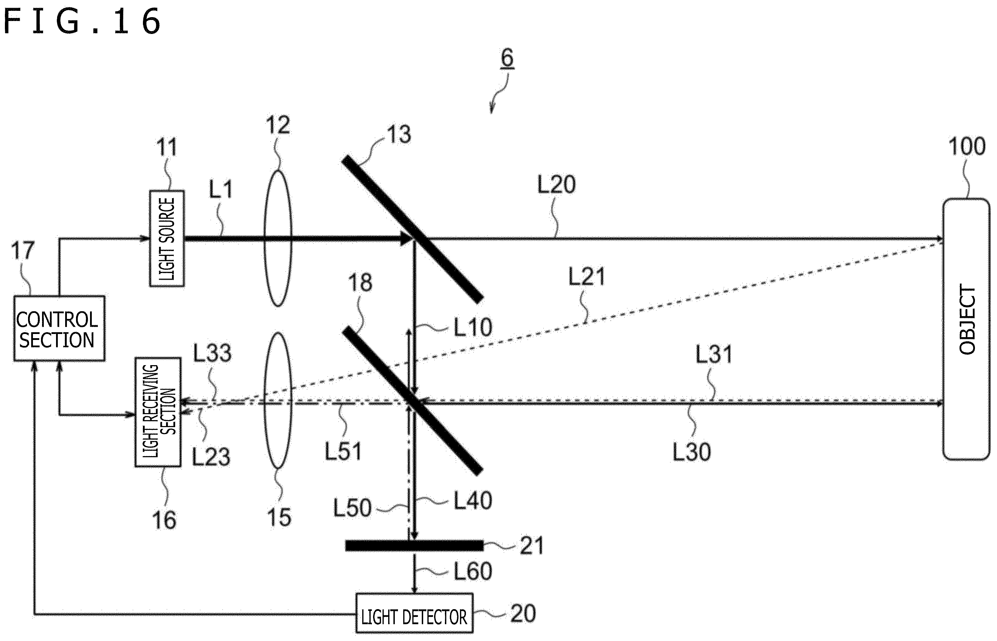

FIG. 16 is a schematic view depicting the configuration of a distance measuring apparatus as a sixth embodiment.

[FIG. 17]

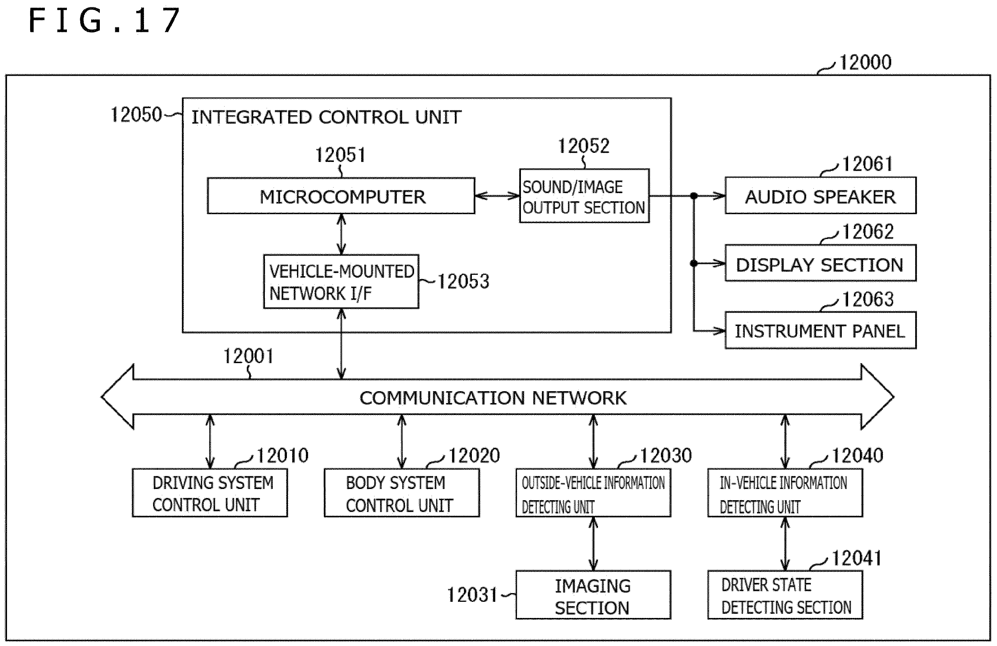

FIG. 17 is a block diagram depicting an example of schematic configuration of a vehicle control system.

[FIG. 18]

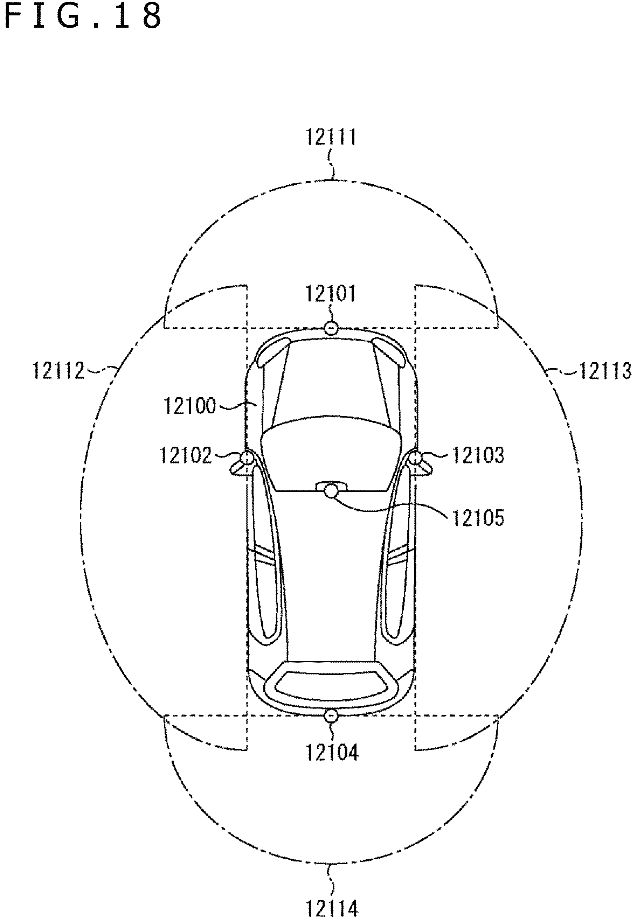

FIG. 18 is a diagram of assistance in explaining an example of installation positions of an outside-vehicle information detecting section and an imaging section.

[Description of Embodiments]

Some preferred embodiments of the present disclosure are described below in detail with reference to the accompanying drawings. It is to be noted that, throughout the ensuing description and the drawings, the constituent elements having substantially identical functions and configurations are represented by the same reference signs, and redundant explanations are omitted.

(First embodiment)

FIG. 1 is a schematic view depicting a configuration of a distance measuring apparatus as a first embodiment. A distance measuring apparatus 1 in FIG. 1 is a LiDAR type distance measuring apparatus that measures the distance to an object 100. It is to be noted that FIG. 1 illustrates an example in which the object 100 is positioned at a short distance from the distance measuring apparatus 1.

The distance measuring apparatus 1 of this embodiment includes a light source 11, a collimator lens 12, a first non-polarizing beam splitter 13, a mirror 14, a light receiving lens 15, a light receiving section 16, and a control section 17. Below is an explanation of each of these constituent elements.

FIG. 2 is a front view of the light source 11. As depicted in FIG. 2, the light source 11 has a plurality of light emitting elements 110 arranged in a two-dimensional array. Each of the light emitting elements 110 includes a VCSEL, for example. Under control of the control section 17, the plurality of light emitting elements 110 can selectively emit source light L1. Further, the intensity of the source light L1 is varied by the control section 17 controlling the value of current supplied to the light emitting elements 110. It is to be noted that the number of the light emitting elements 110 and their layout in FIG. 2 are only examples and are not limitative of this disclosure.

Described with reference to FIG. 1 again, the collimator lens 12 is arranged in front of the traveling direction of the source light L1 (parallel light) with respect to the light source 11. The collimator lens 12 optically converts the source light L1 into parallel light.

The first non-polarizing beam splitter 13 is arranged in front of the traveling direction of the source light L1 (parallel light) with respect to the collimator lens 12. The first non-polarizing beam splitter 13 splits the source light L1 into light L10 and light L20. The light L10 is the light beam reflected by the first non-polarizing beam splitter 13. Meanwhile, the light L20 is the light beam that transmits through the first non-polarizing beam splitter 13.

The first non-polarizing beam splitter 13 has a fixed reflectance ratio regardless of the polarization direction and the incident angle of the source light L1. In this embodiment, the reflectance ratio of the first non-polarizing beam splitter 13 is set to 20% and its transmittance is set to 80%. However, these values are not limitative of the settings of reflectance ratio and transmittance; the transmittance need only be higher than the reflectance ratio. The first non-polarizing beam splitter 13 includes a polka dot beam splitter, for example.

The mirror 14 is arranged in front of the traveling direction of the light L20 with respect to the first non-polarizing beam splitter 13. The reflectance ratio of the mirror 14 is 100%. Consequently, the light L20 is totally reflected by the mirror 14.

The light L10 from the first non-polarizing beam splitter 13 is incident on the object 100 as first incident light. The light L10 reflected by the object 100 becomes light L11 that travels as first reflected light toward the first non-polarizing beam splitter 13. At this time, the angle between the light L11 and the light L10 is approximately zero. This allows the optical axis of the light L11 to substantially align with the optical axis of the light L10. That is, the first non-polarizing beam splitter 13 functions as a first optical component that forms from the source light L1 the light L10 and the light L11 that are coaxial with each other.

The light L11 is split into light L12 and light L13 by the first non-polarizing beam splitter 13. The light L12 is the light beam reflected by the first non-polarizing beam splitter 13. Meanwhile, the light L13 is the light beam that transmits through the first non-polarizing beam splitter 13. Only the light L13 from the light L11 is incident on the light receiving lens 15.

The light L20 totally reflected by the mirror 14 is incident on the object 100 as second incident light. The light L21 from the light L20 reflected by the object 100 travels as second reflected light toward the first non-polarizing beam splitter 13. At this time, the angle $\alpha$ between the light L21 and the light L20 is greater than zero. This causes the optical axis of the light L21 to intersect with that of the light L20. That is, the mirror 14 functions as a second optical component that forms from the source light L1 the light L20 and the light L21 that are not coaxial with each other.

The light L21 is either incident on the first non-polarizing beam splitter 13 or not incident thereon depending on the angle $\alpha$, or on the distance from the distance measuring apparatus 1 to the object 100. In the case where the light L21 is incident on the first non-polarizing beam splitter 13, the light L21 is split into light L22 and light L23. The light L22 is the light beam reflected by the first non-polarizing beam splitter 13. Meanwhile, the light L23 is the light beam that transmits through the first non-polarizing beam splitter 13. In FIG. 1, only the light L23 from the light L21 is incident on the light receiving lens 15.

The light receiving lens 15 is arranged between the first non-polarizing beam splitter 13 and the light receiving section 16. The light receiving lens 15 focuses the light L13 and the light L23 onto the light receiving section 16.

The configuration of the light receiving section 16 is explained hereunder with reference to FIG. 3. FIG. 3 is a block diagram depicting a schematic configuration of the light receiving section 16.

The light receiving section 16 includes a pixel array 161, a TDC (Time to Digital Converter) 162, a histogram generating section 163, and a distance measurement processing section 164. Each of these constituent elements is driven under control of the control section 17.

The pixel array 161 has a plurality of pixels 165 arranged in a two-dimensional array. Each of the pixels 165 includes, for example, a light receiving element and a readout circuit, the light receiving element generating a pixel signal through photoelectric conversion of the light L13 and the light L23 entered via the light receiving lens 15, the readout circuit reading out the pixel signal. The light receiving element is configured by an SPAD (Single Photon Avalanche Diode), for example.

In reference to the pixel signal from the pixel array 161, the TDC 162 converts the timing at which the light receiving element receives light into a digital value.

The histogram generating section 163 generates a histogram in reference to the digital values obtained by the TDC 162.

The distance measurement processing section 164 performs various processes in reference to the histogram generated by the histogram generating section 163. For example, the distance measurement processing section 164 carries out a FIR (Finite Impulse Response) filtering process, echo determination, a depth value (distance value) calculation process, and a peak detection process. As a result of the processing, the distance measurement processing section 164 generates a depth image indicative of the distance from the distance measuring apparatus 1 to the object 100.

With the distance measuring apparatus 1 configured as described above, in the case where the light receiving elements of the light receiving section 16 are an SPAD each, a signal light detection count rate $CR_{sig}$[/s] of the SPAD is expressed by the following formula (1).

[Math. 1]

$$CR_{sig} = \frac{P_{TX}}{R^2 \Omega_{TX}} \cdot \frac{\rho}{4F^2} \cdot \eta_{sys\_sig} \cdot \frac{A_{spad}}{h\,c/\lambda} \cdot PDE \qquad (1)$$

Further, an ambient light detection count rate $Cr_{amb}$[/s] resulting from sunlight is expressed by the following formula (2).

[Math. 2]

$$CR_{amb} = E_b \cdot \frac{\rho}{4F^2} \cdot \eta_{sys\_bkg} \cdot \frac{A_{spad}}{h\,c/\lambda} \cdot PDE \qquad (2)$$

Here, the parameters in the formulas (1) and (2) above are listed in Table 1 below.

[Table 1]

| Table 1. Explanation of parameters constituting the count rates | |
| --- | --- |
| $\rho$: Reflectance rate of subject | $E_b$: Illuminance of subject under sunlight [W/m$^2$] |
| F: F value of light receiving lens | $\eta_{sys\_sig}$: Efficiency of system relative to signal light |
| R: Distance to subject [m] | $\eta_{sys\_bkg}$: Efficiency of system relative to ambient light |
| $\Omega_{rx}$: Irradiation solid angle [sr] | $\lambda$: Laser wavelength [m] |
| $P_{TX}$: Laser emission intensity [W] | C: Light speed [m/s] |
| $A_{spad}$: SPAD area [m$^2$] | h: Planck's constant [J·s] |
| PDE: SPAD detection probability | |

FIG. 4 is a graphic representation depicting an exemplary histogram generated by the histogram generating section 163. As indicated in FIG. 4, ambient light is detected at a constant level by SPADs regardless of time. By contrast, in a time interval where SPADs output signal light in a pulse manner, the number of photons is added. The number of ambient light level entries $N_{amb}$, the number of peak entries $N_{peak}$, and a signal-to-ambient light ratio SNR are expressed by the following formulas (3), (4), and (5), respectively, with use of the count rates.

[Math. 3]

$$N_{sig+bkg} = N \cdot \left(1 - e^{-(CR_{sig}+CR_{bkg})T_{bin}}\right) \qquad (3)$$

[Math. 4]

$$N_{bkg} = N \cdot \left(1 - e^{-CR_{bkg}T_{bin}}\right) \qquad (4)$$

[Math. 5]

$$SNR \equiv \frac{N_{peak} - N_{amb}}{\sqrt{N_{peak} + N_{amb}}} = \sqrt{N} \frac{e^{-CR_{amb}T_{bin}}\left(1 - e^{-CR_{sig}T_{bin}}\right)}{\sqrt{2 - e^{-CR_{amb}T_{bin}}\left(1 + e^{-CR_{sig}T_{bin}}\right)}} \tag{5}$$

In the above formulas, $T_{bin}$ stands for the duration per bin [s], and $N$ denotes the number of light emissions.

FIG. 5 is a graphic representation explanatory of relations between an F value of the light receiving lens 15 and the histogram. The above-mentioned signal-to-ambient light ratio SNR is contingent on the F value of the light receiving lens 15. The smaller the F value of the light receiving lens 15, the higher the SPAD count rate becomes. However, the presence of a dynamic range in the SPAD count makes it difficult to distinguish signal light from ambient light in a case where the F value is too small, as illustrated in FIG. 5. In this case, the signal-to-ambient light ratio SNR is worsened. For this reason, as indicated in FIG. 4, the F value of the light receiving lens 15 should preferably be set in such a manner as to optimize the signal-to-ambient light ratio SNR.

For example, it is assumed that the reflectance ratio of the first non-polarizing beam splitter 13 is 20%, that the transmittance of the first non-polarizing beam splitter 13 is 80%, and that the distance between the first non-polarizing beam splitter 13 and the mirror 14 is 5 cm, as the conditions for a light projection system. It is further assumed that, of the plurality of pixels 165, four mutually adjacent light detecting pixels 165 (2×2 pixels) are set to detect the source light L1 emitted from one of the plurality of light emitting elements 110, as the condition for a light receiving system.

In the case of the above conditions, the transmittance of the first non-polarizing beam splitter 13 is 80%, so that the terms $\eta_{sys\_sig}$ and $\eta_{sys\_bkg}$ indicated in the formulas (1) and (2) above are each multiplied by 0.8 each. This can presumably worsen the performance of distance measurement. However, the SPAD count rate is recovered by multiplying the F value of the light receiving lens 15 by 0.9 for adjustment. This contributes to maintaining the performance of distance measurement.

When the measures above are taken to recover the count rate, the formulas (1) and (2) above indicate that the ambient light count rate is not contingent on the distance to the object 100 and that only the signal light count rate is contingent on that distance.

FIG. 6 is a schematic view depicting the configuration of a distance measuring apparatus as a comparative example. A distance measuring apparatus 1a in FIG. 6 is not equipped with the first non-polarizing beam splitter 13 and the mirror 14. Further, a distance "d" between an optical axis X1 of the light projection system and an optical axis X2 of the light receiving system is approximately 5 cm. Here, the optical axis X1 of the light projection system is the optical axis of the source light L1 emitted from one of the plurality of light emitting elements 110. Meanwhile, the optical axis X2 of the light receiving system corresponds to an axis perpendicular to the light receiving surface of the pixels 165 (SPAD) in the light receiving section 16. Further, the distance measuring apparatus 1a is designed in such a manner that the maximum distance to be measured by the distance measuring apparatus is 150 m.

FIG. 7 is a graphic representation depicting the distance measurement characteristics of the distance measuring apparatus 1a as the comparative example. In FIG. 7, the horizontal axis represents a distance R from the distance measuring apparatus 1a, and the vertical axis denotes an SPAD count rate CR. In FIG. 7, a characteristic C1 denotes the count rate CR characteristic of a first light detecting pixel 165a, and a characteristic C2 represents the count rate CR characteristic of a second light detecting pixel 165b. The first light detecting pixel 165a and the second light detecting pixel 165b, which are adjacent to each other, are two of the four light detecting pixels (2×2 pixels) that are set to detect reflected light L200 from the source light L1 reflected by the object 100.

It is to be noted that a characteristic C3 in FIG. 7 stands for the CR characteristic of a light detecting pixel in the case where the distance "d" between the optical axes X1 and X2 is zero, i.e., where the optical axis X1 and the optical axis X2 are coaxial with each other. Further, a minimum value CRmin in FIG. 7 denotes a minimum count rate necessary in a case where the maximum value of the distance R is 150. In the distance measuring apparatus 1a of this comparative example, the position of the reflected light L200 formed by the light receiving lens 15 is varied depending on the distance R. This in turn varies the amount of the reflected light L200 received by the first light detecting pixel 165a and by the second light detecting pixel 165b. In the characteristic diagram of FIG. 7, in a case where the distance R is 23 m or less, the count rate CR of the first light detecting pixel 165a and that of the second light detecting pixel 165b are each smaller than the minimum value CRmin. This makes it impossible for the distance measuring apparatus 1a of this comparative example to measure the distance of 23 m or less. However, if the optical axis X1 and the optical axis X2 are coaxial with each other as indicated by the characteristic C3, the distance of 23 m or less can be measured. Thus, in this embodiment, the first non-polarizing beam splitter 13 forms the light L10 and the light L11 with the same optical axis.

FIG. 8A is a graphic representation depicting the distance measurement characteristics of the first light detecting pixel 165a of the first embodiment. Further, FIG. 8B is a graphic representation depicting the distance measurement characteristics of the second light detecting pixel 165b of the second embodiment.

In FIGS. 8A and 8B, the horizontal axis represents the distance R from the distance measuring apparatus 1, and the vertical axis denotes the count rate CR of each pixel. Further, in each of these drawings, characteristics C11 and C21 each indicate the count rate CR based on the received light L13 with the same optical axis. Characteristics C12 and C22 each indicate the count rate CR based on the received light L23 with a different optical axis. It is to be noted that a characteristic C13 results from adding up the count rate indicated by the characteristic C11 and the count rate given by the characteristic C12. A characteristic C23 is the result from adding up the count rate indicated by the characteristic C21 and the count rate given by the characteristic C22.

In the case where the reflectance ratio of the first non-polarizing beam splitter 13 is set to 20%, for example, the quantity of the light L10 is 20% that of the source light L1. Consequently, as indicated by the characteristic C11 in FIG. 8A, the distance R that can be detected by the first light detecting pixel 165a is 67 m. Meanwhile, the light L13 and the light L11 are coaxial with each other, which makes the distance between their optical axes practically zero. This virtually eliminates a parallax, allowing the first light detecting pixel 165a to detect the distance of 67 m or less.

The quantity of the light L20 that transmits through the first non-polarizing beam splitter 13 is 80% that of the source light L1. Consequently, as indicated by the characteristic C12 in FIG. 8A, the maximum value of the distance R that can be detected by the first light detecting pixel 165a is 130 m. Meanwhile, there occurs a parallax because the light 23 and the light L20 have different optical axes. As a result, the first light detecting pixel 165a is unable to detect the distance R of 23 m or less. However, as indicated by the characteristic C13 in FIG. 8A, adding up the characteristics C11 and C12 allows the first light detecting pixel 165a to detect the distance R ranging from 0 to 150 m.

As indicated by the characteristic C23 in FIG. 8B, adding up the count rate based on the received light L13 with the same optical axis and the count rate based on the received light 23 with a different optical axis allows the second light detecting pixel 165b to detect the distance R ranging from 0 to 150 m, as in the case of the first light detecting pixel 165a.

In the distance measuring apparatus 1 of this embodiment, the first non-polarizing beam splitter 13 and the mirror 14 are used to form, from the source light L1, the light L13 with the same optical axis and the light 23 with a different optical axis as described above. This makes it possible to improve the performance of distance measurement even when the light source 11 includes the light emitting elements 110 such as VCSELs of which the polarization is difficult to fix in one direction.

In the distance measuring apparatus 1 of this embodiment, when the transmittance of the first non-polarizing beam splitter 13 is smaller than its reflectance ratio, it is necessary to increase the F value of the light receiving lens 15 in order to maintain the performance of distance measurement. In this case, the burden of optics design increases. For this reason, the transmittance of the first non-polarizing beam splitter 13 should preferably be made at least greater than its reflectance ratio. Further, as the distance between the first non-polarizing beam splitter 13 and the mirror 14 becomes shorter, the minimum distance that can be measured in reference to the received light 23 with a different optical axis is contracted. This makes it easier to keep the transmittance of the first non-polarizing beam splitter 13 high. The transmittance and reflectance ratio of the first non-polarizing beam splitter 13, as well as the distance between the first non-polarizing beam splitter 13 and the mirror 14, can be optimized by the formulas (1) and (2) above using suitable values, according to the target maximum distance to be measured.

Further, since the branching ratio (transmittance and reflectance ratio) of a non-polarizing beam splitter is not contingent on incident angle, the performance of distance measurement is uniformly maintained no matter which of the plurality of light emitting elements 110 emits the source light L1.

It is to be noted that, in the case where the distance between the object 100 and the distance measuring apparatus 1 is short, the angle $\alpha$ (see FIG. 1) between the light L20 and the light L21 becomes large. Consequently, a case is expected where the light L13 with the same optical axis is incident on the light detecting pixels of the light receiving section 16 whereas the light L23 with a different optical axis is not incident thereon. In this case, the amount of the light received by the light detecting pixels is reduced by the quantity of the light L23. However, since the distance between the object 100 and the distance measuring apparatus 1 is short, the quantity of the light L13 is increased. This makes it possible to provide a sufficient quantity of light for measuring short distances. Alternatively, it is possible to ensure a sufficient quantity of light for short distance measurement by adjusting the F value of the light receiving lens 15.

Meanwhile, in the case where the distance between the object 100 and the distance measuring apparatus 1 is long, the angle $\alpha$ becomes small. Consequently, both the light L13 with the same optical axis and the light L23 with a different optical axis are incident on the light detecting pixels. This makes it possible to provide a sufficient quantity of light for measuring long distances. Using the light L13 and the light L23 in such a manner enables long distance measurement while substantially suppressing a light loss corresponding to the quantity of the light not used for distance measurement.

(Second embodiment)

FIG. 9 is a schematic view depicting the configuration of a distance measuring apparatus as a second embodiment. A distance measuring apparatus 2 in FIG. 9 is mounted on a vehicle. Further, in the distance measuring apparatus 2, the mirror 14 is configured to be rotationally driven under control of the control section 17. The control section 17 controls the angle of the mirror 14 in reference to the result of detection by at least either a speed sensor 201 or an imaging sensor 202 on board the vehicle. The speed sensor 201 detects the speed of the vehicle. The imaging sensor 202 includes vehicle-mounted cameras capturing images of the surrounding environment of the vehicle, for example.

The braking distance of the vehicle varies depending on speed. For example, between the case where the vehicle travels a highway and the case where the vehicle travels a parking lot, there is a difference in alignment distance, i.e., distance to the target for distance measurement. In the case where the vehicle travels a highway, the alignment distance is 100 m or longer, for example. On the other hand, in the case where the vehicle travels a parking lot, the alignment distance is tens of meters.

As such, in this embodiment, the control section 17 sets the alignment distance according to the vehicle speed detected by the speed sensor 201. Alternatively, the control section 17 may analyze the images captured by the imaging sensor 202, to identify the surrounding environment of the vehicle and set the alignment distance according to the surrounding environment thus identified. As another alternative, the control section 17 may set the alignment distance in reference to the result of detection by both the speed sensor 201 and the imaging sensor 202.

Next, the control section 17 drives the mirror 14 according to the established alignment distance. In the case where the alignment distance is set to a short distance of 30 m, for example, the mirror 14 is rotationally driven in such a manner that the angle between the light L10 and the light L20 becomes an angle β1 corresponding to 30 m. Rotationally driving the mirror 14 changes the angle at which the light L20 transmitting through the first non-polarizing beam splitter 13 is incident on the mirror 14. This in turn changes the reflection direction of the light L20, allowing the angle between the light L10 and the light L20 to be adjusted to the angle β1.

FIG. 10 is a schematic view depicting a case where the alignment distance is set to be long. In the case where the alignment distance is set to 150 m, for example, the mirror 14 is rotationally driven in such a manner that the angle between the light L10 and the light L20 becomes an angle β2 corresponding to 150 m. At this time, the control section 17 controllably drives the mirror 14 in such a manner that the incident angle of the light L20 on the mirror 14 becomes larger than that in the case of a shorter distance. This adjusts the angle between the light L10 and the light L20 to the angle β2 that is smaller than the above-mentioned angle β1.

FIG. 11A is a graphic representation of the count rate characteristic of the light detecting pixels in the case where the alignment distance is set to 30 m. Further, FIG. 11B is a graphic representation of the count rate characteristic of the light detecting pixels in the case where the alignment distance is set to 150 m. In FIGS. 11A and 11B, the horizontal axis represents the distance R from the distance measuring apparatus 2. The vertical axis denotes the SPAD count rate of the light detecting pixels. Further, as depicted in FIG. 7 for the first embodiment, the characteristic C10 denotes the count rate characteristic of the first light detecting pixel 165a. Meanwhile, the characteristic C20 represents the count rate characteristic of the second light detecting pixel 165b.

In this embodiment, as indicated in FIGS. 11A and 11B, the point of intersection between the characteristics C10 and C20 is moved in a manner corresponding to the alignment distance. That is, the count rate of the light detecting pixels is maximized according to the alignment distance. Consequently, a count rate reduction amount ΔCR1 in FIG. 11A is larger than a count rate reduction amount ΔCR2 in FIG. 11B. This means that, in the case of a short alignment distance, the power consumption of the light source 11 is reduced by making the intensity of the source light L1 lower than that in the case of a long alignment distance. Yet, in this embodiment, the count rate CR, i.e., the signal-to-ambient light ratio SNR, is maximized according to the alignment distance. As a result, the performance of distance measurement is maintained even if the intensity of the source light L1 is reduced.

(Third embodiment)

FIG. 12 is a schematic view depicting the configuration of a distance measuring apparatus as a third embodiment. A distance measuring apparatus 3 in FIG. 12 differs from the distance measuring apparatus 1 of the first embodiment in that a second non-polarizing beam splitter 18 is provided as a second optical component replacing the mirror 14. Moreover, the distance measuring apparatus 3 of this embodiment further includes a condenser lens 19 and a light detector 20.

The second non-polarizing beam splitter 18 splits the light L20 transmitting through the first non-polarizing beam splitter 13 into light L20a and light L20b. The light L20a reflected by the second non-polarizing beam splitter 18 is incident on the object 100 as second incident light. Meanwhile, the light L20b transmitting through the second non-polarizing beam splitter 18 is incident on the condenser lens 19. The reflectance ratio and transmittance of the second non-polarizing beam splitter 18 may be set as desired. It is to be noted, however, that the light L20a needs to have a minimum required light quantity for ensuring the performance of distance measurement. For this reason, it is desired that the reflectance ratio of the second non-polarizing beam splitter 18 be set to be larger than its transmittance.

The condenser lens 19 is arranged in front of the traveling direction of the light L20b with respect to the second non-polarizing beam splitter 18. The condenser lens 19 focuses the light L20b onto the light detector 20.

The light detector 20 receives the light L20b incident thereon via the condenser lens 19. The light detector 20 includes a photodiode, for example. This photodiode generates a light detection signal indicative of the quantity of the light L20b and outputs the generated signal to the control section 17.

The quantity of the light L20b corresponds to the intensity of the source light L1. Consequently, in this embodiment, the light detection signal from the light detector 20 allows the control section 17 to monitor the intensity of the source light L1. At this time, if the quantity of light indicated by the light detection signal falls within a predetermined acceptable range, the control section 17 determines that the light source 11 is normal. On the other hand, if the above quantity of light is outside the predetermined acceptable range, the control section 17 determines that the light source 11 has failed.

According to this embodiment explained above, it is possible to detect a failure of the light source 11 by monitoring the intensity of the source light L1.

(Fourth embodiment)

FIG. 13 is a schematic view depicting the configuration of a distance measuring apparatus as a fourth embodiment. In a distance measuring apparatus 4 in FIG. 13, the second non-polarizing beam splitter 18 is arranged between the first non-polarizing beam splitter 13 and the mirror 14. In this embodiment, the reflectance ratio of the first non-polarizing beam splitter 13 is set to be larger than its transmittance. For example, the reflectance ratio of the first non-polarizing beam splitter 13 is set to 80% and its transmittance is set to 20%.

In contrast, the reflectance ratio of the second non-polarizing beam splitter 18 is set to be smaller than its transmittance. For example, the reflectance ratio of the second non-polarizing beam splitter 18 is set to 20% and its transmittance is set to 80%. It is to be noted that the above values are not limitative of the reflectance ratio and transmittance of each non-polarizing beam splitter.

In the distance measuring apparatus 4 of this embodiment, the light L10 from the source light L1 emitted by the light source 11 and reflected by the first non-polarizing beam splitter 13 is incident on the second non-polarizing beam splitter 18. The second non-polarizing beam splitter 18 splits the light L10 reflected by the first non-polarizing beam splitter 13 into light L30 and light L40. The light L30 is the light beam reflected by the second non-polarizing beam splitter 18. Meanwhile, the light L40 is the light beam transmitting through the second non-polarizing beam splitter 18.

The light L30 above is incident on the object 100 as first incident light. Light L31 from the light L30 reflected by the object 100 travels as first reflected light toward the second non-polarizing beam splitter 18. At this time, the optical axis of the light L31 and that of the light L30 are approximately aligned with each other. Consequently, the second non-polarizing beam splitter 18 in this embodiment functions as a first optical component that forms the light L30 and the light L31 that are coaxial with each other. It is to be noted that the light L31 is further split into transmitted light and reflected light by the second non-polarizing beam splitter 18. Light L33, which is the transmitted light, transmits through the light receiving lens 15 and is received by the light receiving section 16.

Light L40, which is the transmitted light from the second non-polarizing beam splitter 18, is totally reflected by the mirror 14. After the total reflection, the light L40 is incident on the object 100 as third incident light. At this time, the mirror 14 is arranged in such a manner that the optical axis of the totally reflected light L40 is in parallel with the optical axis of the light L30. Further, light L41 from the light L40 reflected by the object 100 travels as third reflected light toward the second non-polarizing beam splitter 18. The light L40 and the light L41 have different optical axes and are thus not coaxial with each other. The light L41 is split into transmitted light and reflected light by the second non-polarizing beam splitter 18. Light L43, which is the transmitted light, transmits through the light receiving lens 15 and is received by the light receiving section 16.

Meanwhile, the light L20 transmitting through the first non-polarizing beam splitter 13 is incident on the object 100 as second incident light. The light L21 from the light L20 reflected by the object 100 travels as second reflected light toward the second non-polarizing beam splitter 18. In this embodiment, the first non-polarizing beam splitter 13 functions as a second optical component that forms the light L20 and the light L21 which are not coaxial with each other and of which the optical axes intersect with each other (i.e., not aligned with each other). The light L21 is further split into transmitted light and reflected light by the second non-polarizing beam splitter 18. Light L23, which is the transmitted light, transmits through the light receiving lens 15 and is received by the light receiving section 16.

The distance measuring apparatus 4 of this embodiment is designed in such a manner that the light L20 and the light L30 intersect with each other at a predetermined alignment distance and that the light L40 is in parallel with the light L30. In this case, if the object 100 is arranged at the alignment distance, the light detecting pixels of the light receiving section 16 receive the light L23, which is part of the reflected light from the light L20 reflected by the object 100, and the light L33, which is part of the reflected light from the light L30 reflected by the object 100. Meanwhile, the light L43, which is part of the light L40 reflected by the object 100, deviates from the above-mentioned light receiving pixels.

In reference to FIG. 14, a case is assumed here in which the distance measuring apparatus 4 is arranged fixedly and the object 100 is a mobile body.

FIG. 14 is a schematic view depicting the state in which the object 100 targeted for distance measurement by the distance measuring apparatus 4 of the fourth embodiment is moved. In FIG. 14, the object 100 is moved to a position more distant than the alignment distance. In such a case, the light L33 with the same optical axis is received by the light detecting pixels of the light receiving section 16. In contrast, the light L23 with a different optical axis may deviate from the light detecting pixels. In this case, the amount of the light received by the light detecting pixels is reduced, which is expected to worsen the signal-to-ambient light ratio SNR.

In this embodiment, however, the movement of the object 100 reduces the angle y between the light L40 and the light L41 having different optical axes. This causes the light L43, which is part of the light L41, to approach the light detecting pixels. Consequently, the quantity of the light L43 compensates for the reduced amount of the light received by the light detecting pixels.

As a result, this embodiment makes it possible to minimize the deterioration of the signal-to-ambient light ratio SNR caused by the object 100 being moved.

(Fifth embodiment)

FIG. 15 is a schematic view depicting the configuration of a distance measuring apparatus as a fifth embodiment of the present disclosure. The paragraphs that follow explain primarily the differences between the fifth embodiment and the above-described fourth embodiment.

In the fourth embodiment discussed above, the light source 11 needs to be arranged in such a manner that the light L20 transmitting through the first non-polarizing beam splitter 13 intersects with the light L30 at the alignment distance. This imposes constraints requiring the light source 11 to be arranged obliquely relative to the light receiving section 16, as illustrated in FIG. 13. That in turn raises the level of difficulty in designing an enclosure that houses a distance measuring apparatus 5.

In the distance measuring apparatus 5 of this embodiment, by contrast, the light source 11 is arranged in such a manner that the optical axis of the light L20 transmitting through the first non-polarizing beam splitter 13 becomes parallel with the optical axis of the light L30 reflected by the second non-polarizing beam splitter 18. This eases the constraints on the arrangement of the light source 11 as compared with the fourth embodiment. It is to be noted that, in this embodiment, the mirror 14 is arranged in such a manner that the light L40 totally reflected by the mirror 14 intersects with the light L30 at the alignment distance.

Still, arranging the mirror 14 in the above manner is easier than arranging the light source 11 as in the fourth embodiment. Consequently, the level of difficulty in designing the enclosure is lower with this embodiment than with the fourth embodiment. This makes it possible to make the enclosure smaller in size.

(Sixth embodiment)

FIG. 16 is a schematic view depicting the configuration of a distance measuring apparatus as a sixth embodiment. The following paragraphs explain primarily the differences between the sixth embodiment and the above-described fifth embodiment.

A distance measuring apparatus 6 of this embodiment includes a reflecting plate 21 in place of the mirror 14. Moreover, the distance measuring apparatus 6 further includes the light detector 20 explained above in connection with the third embodiment (see FIG. 12).

The reflectance ratio of the reflecting plate 21 is less than 100%. As a result, part of the light L40 transmitting through the second non-polarizing beam splitter 18 is reflected by the reflecting plate 21, with the remaining light transmitting therethrough. Light L50, which is the reflected light, is split into reflected light and transmitted light by the second non-polarizing beam splitter 18. Light L51, which is the reflected light, transmits through the light receiving lens 15 and is received by the light receiving section 16. Meanwhile, light L60, which transmits through the reflecting plate 21, is incident on the light detector 20. The light detector 20 detects the quantity of the light L60 and outputs the result of the detection to the control section 17.

In the distance measuring apparatus 6 configured as described above, if the light source 11 is defective, for example, the intensity of emission of the source light L1 becomes lower than the design value. This in turn reduces the quantity of the light L60 as part of the source light L1. Consequently, in a case where the quantity of the light L60 detected by the light detector 20 is less than a predetermined reference value, for example, the control section 17 determines that the light source 11 has failed.

In contrast, in the case where the quantity of the light L60 is equal to or higher than the reference value, the control section 17 determines that the light source 11 is normal. In this case, the light receiving pixels of the light receiving section 16 receive the light L23 and the light L33, which are reflected by the object 100, and the light L51 reflected by the reflecting plate 21 and by the second non-polarizing beam splitter 18. However, if the light receiving section 16 has failed, these beams of light are not correctly received by the light detecting pixels. Hence, in the case where the amount of the light received by the light detecting pixels as indicated by the pixel signals output from the pixel array 161 is smaller than a predetermined threshold value, the control section 17 determines that the light receiving section 16 is defective.

This embodiment explained above thus makes it possible to detect either the failure of the light source 11 or the failure of the light receiving section 16 in a manner distinct from each other.

<Examples of application to mobile bodies>

The technology of the present disclosure (the present technology) may be applied to diverse products. For example, the technology of the present disclosure may be implemented as an apparatus to be mounted on such mobile bodies as automobiles, electric vehicles, hybrid electric vehicles, motorcycles, bicycles, personal mobility devices, aircraft, drones, ships, and robots.

FIG. 17 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in FIG. 17, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 17, an audio speaker 12061, a display section 12062, and an instrument panel 12063 are illustrated as the output device. The display section 12062 may, for example, include at least one of an on-board display and a head-up display.

FIG. 18 is a diagram depicting an example of the installation position of the imaging section 12031.

In FIG. 18, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 18 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

The vehicle control system as an example to which the technology of the present disclosure can be applied has been explained above. This technology of the present disclosure may be applied to the imaging section 12031 among the components discussed above. Specifically, the above-described distance measuring apparatus may be incorporated in the imaging section 12031. Applying the technology of the present disclosure to the imaging section 12031 improves the performance of distance measurement. As a result, the functionality and safety of the vehicle 12100 are improved.

It is to be noted that the present technology can also take the following configurations.

(1) A distance measuring apparatus including:

a light source configured to have a plurality of light emitting elements;
a first optical component configured to form, from source light emitted from at least one of the plurality of light emitting elements, first incident light incident on an object targeted for distance measurement and first reflected light from the first incident light reflected by the object, in such a manner that the first incident light and the first reflected light are coaxial with each other;
a second optical component configured to form, from the source light, second incident light incident on the object and second reflected light from the second incident light reflected by the object in such a manner that an optical axis of the second incident light and the optical axis of the second reflected light are different from and intersect with each other; and
a light receiving section configured to receive the first reflected light and the second reflected light and measure a distance to the object in reference to an amount of the received light.

(2) The distance measuring apparatus according to (1), in which the first optical component is a non-polarizing beam splitter splitting the source light into two beams of light,

the second optical component is a mirror totally reflecting one of the two beams of light that transmits through the non-polarizing beam splitter,
the first incident light is one of the two beams of light that is reflected by the non-polarizing beam splitter, and
the second incident light is the light that transmits through the non-polarizing beam splitter and is totally reflected by the mirror.

(3) The distance measuring apparatus according to (2), in which transmittance of the non-polarizing beam splitter is set to be larger than a reflectance ratio thereof.

(4) The distance measuring apparatus according to (2) or (3), further including:
a control section configured to drive the mirror in reference to at least either a result of detecting a speed of a vehicle or a result of detecting a surrounding environment of the vehicle.

(5) The distance measuring apparatus according to (4), in which the control section sets a specific distance according to the result of the detection to drive the mirror in such a manner that an angle between the first incident light and the second incident light is adjusted to an angle set according to the specific distance.

(6) The distance measuring apparatus according to (1), in which the first optical component is a first non-polarizing beam splitter splitting the source light into two beams of light,

the second optical component is a second non-polarizing beam splitter splitting one of the two beams of light that transmits through the first non-polarizing beam splitter into another two beams of light,
the first incident light is one of the two beams of light that is reflected by the first non-polarizing beam splitter, and
the second incident light is one of the other two beams of light that is reflected by the second non-polarizing beam splitter,
the distance measuring apparatus further including a light detector configured to detect one of the other two beams of light that transmits through the second non-polarizing beam splitter, and a control section configured to detect a failure of the light source in reference to the quantity of the light detected by the light detector.

(7) The distance measuring apparatus according to (6), in which a reflectance ratio of the second non-polarizing beam splitter is set to be higher than transmittance thereof.

(8) The distance measuring apparatus according to (1), in which the second optical component is a first non-polarizing beam splitter splitting the source light into two beams of light,

the first optical component is a second non-polarizing beam splitter splitting one of the two beams of light that is reflected by the first non-polarizing beam splitter into another two beams of light,

the first incident light is one of the other two beams of light that is reflected by the second non-polarizing beam splitter, and

the second incident light is one of the two beams of light that transmits through the first non-polarizing beam splitter,

the distance measuring apparatus further including a mirror configured to totally reflect one of the other two beams of light that transmits through the second non-polarizing beam splitter.

(9) The distance measuring apparatus according to (8), in which third incident light totally reflected by the mirror is incident on the object and reflected by the object to become third reflected light ready to be received by the light receiving section, and

the optical axis of the third incident light is in parallel with the optical axis of the first incident light.

(10) The distance measuring apparatus according to (9), in which a reflectance ratio of the first non-polarizing beam splitter is set to be higher than transmittance thereof, and

the reflectance ratio of the second non-polarizing beam splitter is set to be lower than the transmittance thereof.

(11) The distance measuring apparatus according to (9) or (10), in which the light receiving section receives either the second reflected light or the third reflected light depending on the distance.

(12) The distance measuring apparatus according to (11), in which the object is a mobile body,

in a case where the object is positioned at a specific distance, the light receiving section receives the first reflected light and the second reflected light, and,

in a case where the object is moved from the distance measuring apparatus to a position more distant than the specific distance, the light receiving section receives the first reflected light and the third reflected light.

(13) The distance measuring apparatus according to (7), in which the light source is arranged in such a manner that the optical axis of the second incident light is in parallel with the optical axis of the first incident light.

(14) The distance measuring apparatus according to (1), in which the second optical component is a first non-polarizing beam splitter splitting the source light into two beams of light,

the first optical component is a second non-polarizing beam splitter splitting one of the two beams of light that is reflected by the first non-polarizing beam splitter into another two beams of light,

the first incident light is one of the other two beams of light that is reflected by the second non-polarizing beam splitter, and

the second incident light is one of the two beams of light that transmits through the first non-polarizing beam splitter,

the distance measuring apparatus further including a reflecting plate configured to partially reflect one of the other two beams of light that transmits through the second non-polarizing beam splitter, a light detector configured to detect the light transmitting through the reflecting plate, and a control section configured to detect a failure of the light source and a failure of the light receiving section, in reference to a quantity of the light detected by the light detector and an amount of the light received by the light receiving section.

(15) The distance measuring apparatus according to (14), in which the control section determines that the light source has failed in a case where the quantity of the light is smaller than a predetermined reference value, the control section further determining that the light receiving section has failed in a case where the quantity of the light is equal to or larger than the reference value and where the amount of the received light is smaller than a predetermined threshold value.

[Reference Signs List]

1 to 6: Distance measuring apparatus
11: Light source
13: First non-polarizing beam splitter
14: Mirror
16: Light receiving section
17: Control section
18: Second non-polarizing beam splitter
20: Light detector

21: Reflecting plate
100: Object

## Claims

1. A distance measuring apparatus comprising:

   a light source configured to have a plurality of light emitting elements;
   a first optical component configured to form, from source light emitted from at least one of the plurality of light emitting elements, first incident light incident on an object targeted for distance measurement and first reflected light from the first incident light reflected by the object, in such a manner that the first incident light and the first reflected light are coaxial with each other;
   a second optical component configured to form, from the source light, second incident light incident on the object and second reflected light from the second incident light reflected by the object in such a manner that an optical axis of the second incident light and the optical axis of the second reflected light are different from and intersect with each other; and
   a light receiving section configured to receive the first reflected light and the second reflected light and measure a distance to the object in reference to an amount of the received light.

2. The distance measuring apparatus according to claim 1, wherein the first optical component is a non-polarizing beam splitter splitting the source light into two beams of light,

   the second optical component is a mirror totally reflecting one of the two beams of light that transmits through the non-polarizing beam splitter,
   the first incident light is one of the two beams of light that is reflected by the non-polarizing beam splitter, and
   the second incident light is the light that transmits through the non-polarizing beam splitter and is totally reflected by the mirror.

3. The distance measuring apparatus according to claim 2, wherein transmittance of the non-polarizing beam splitter is set to be larger than a reflectance ratio thereof.

4. The distance measuring apparatus according to claim 2, further comprising:
   a control section configured to drive the mirror in reference to at least either a result of detecting a speed of a vehicle or a result of detecting a surrounding environment of the vehicle.

5. The distance measuring apparatus according to claim 4, wherein the control section sets a specific distance according to the result of the detection to drive the mirror in such a manner that an angle between the first incident light and the second incident light is adjusted to an angle set according to the specific distance.

6. The distance measuring apparatus 1 according to claim 1, wherein the first optical component is a first non-polarizing beam splitter splitting the source light into two beams of light,

   the second optical component is a second non-polarizing beam splitter splitting one of the two beams of light that transmits through the first non-polarizing beam splitter into another two beams of light,
   the first incident light is one of the two beams of light that is reflected by the first non-polarizing beam splitter, and
   the second incident light is one of the other two beams of light that is reflected by the second non-polarizing beam splitter,
   the distance measuring apparatus further including a light detector configured to detect one of the other two beams of light that transmits through the second non-polarizing beam splitter, and a control section configured to detect a failure of the light source in reference to the quantity of the light detected by the light detector.

7. The distance measuring apparatus according to claim 6, wherein a reflectance ratio of the second non-polarizing beam splitter is set to be higher than transmittance thereof.

8. The distance measuring apparatus according to claim 1, wherein the second optical component is a first non-polarizing beam splitter splitting the source light into two beams of light,

the first optical component is a second non-polarizing beam splitter splitting one of the two beams of light that is reflected by the first non-polarizing beam splitter into another two beams of light,
the first incident light is one of the other two beams of light that is reflected by the second non-polarizing beam splitter, and
the second incident light is one of the two beams of light that transmits through the first non-polarizing beam splitter,
the distance measuring apparatus further including a mirror configured to totally reflect one of the other two beams of light that transmits through the second non-polarizing beam splitter.

9. The distance measuring apparatus according to claim 8, wherein third incident light totally reflected by the mirror is incident on the object and reflected by the object to become third reflected light ready to be received by the light receiving section, and
the optical axis of the third incident light is in parallel with the optical axis of the first incident light.

10. The distance measuring apparatus according to claim 9, wherein a reflectance ratio of the first non-polarizing beam splitter is set to be higher than transmittance thereof, and
the reflectance ratio of the second non-polarizing beam splitter is set to be lower than the transmittance thereof.

11. The distance measuring apparatus according to claim 9, wherein the light receiving section receives either the second reflected light or the third reflected light depending on the distance.

12. The distance measuring apparatus according to claim 11, wherein the object is a mobile body,

in a case where the object is positioned at a specific distance, the light receiving section receives the first reflected light and the second reflected light, and,
in a case where the object is moved from the distance measuring apparatus to a position more distant than the specific distance, the light receiving section receives the first reflected light and the third reflected light.

13. The distance measuring apparatus according to claim 7, wherein the light source is arranged in such a manner that the optical axis of the second incident light is in parallel with the optical axis of the first incident light.

14. The distance measuring apparatus according to claim 1, wherein the second optical component is a first non-polarizing beam splitter splitting the source light into two beams of light,

the first optical component is a second non-polarizing beam splitter splitting one of the two beams of light that is reflected by the first non-polarizing beam splitter into another two beams of light,
the first incident light is one of the other two beams of light that is reflected by the second non-polarizing beam splitter, and
the second incident light is one of the two beams of light that transmits through the first non-polarizing beam splitter,
the distance measuring apparatus further including a reflecting plate configured to partially reflect one of the other two beams of light that transmits through the second non-polarizing beam splitter, a light detector configured to detect the light transmitting through the reflecting plate, and a control section configured to detect a failure of the light source and a failure of the light receiving section, in reference to a quantity of the light detected by the light detector and an amount of the light received by the light receiving section.

15. The distance measuring apparatus according to claim 14, wherein the control section determines that the light source has failed in a case where the quantity of the light is smaller than a predetermined reference value, the control section further determining that the light receiving section has failed in a case where the quantity of the light is equal to or larger than the reference value and where the amount of the received light is smaller than a predetermined threshold value.

F I G . 1

F I G . 2

11

110

F I G . 3

16

161      162      163      164

165

165a

165b

TDC

HISTOGRAM GENERATING SECTION

DISTANCE MEASUREMENT PROCESSING SECTION

FIG.4

FIG.5

EP 4 524 609 A1

# FIG.6

# FIG.7

F I G . 8 A

F I G . 8 B

FIG.9

EP 4 524 609 A1

FIG.10

# FIG.11A

ALIGNMENT DISTANCE : 30m

# FIG.11B

ALIGNMENT DISTANCE : 150m

FIG.12

EP 4 524 609 A1

FIG.13

EP 4 524 609 A1

EP 4 524 609 A1

FIG.15

FIG.16

# FIG.17

EP 4 524 609 A1

# FIG.18

**EP 4 524 609 A1**

<table>
<tr><td colspan="2">INTERNATIONAL SEARCH REPORT</td><td colspan="2">International application No.<br><br>**PCT/JP2023/015417**</td></tr>
</table>

| A. | CLASSIFICATION OF SUBJECT MATTER |

*G01S 7/481*(2006.01)i
FI:   G01S7/481 A

According to International Patent Classification (IPC) or to both national classification and IPC

| B. | FIELDS SEARCHED |

Minimum documentation searched (classification system followed by classification symbols)

G01S7/48 - G01S7/51; G01S17/00 - G01S17/95; G01C3/00 - G01C3/32; G01B11/00 - G01B11/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |

| Category* | Citation of document, with indication, where appropriate, of the relevant passages | Relevant to claim No. |
|---|---|---|
| A | JP 2019-82405 A (PIONEER ELECTRONIC CORPORATION) 30 May 2019 (2019-05-30)<br>entire text, all drawings | 1-15 |
| A | JP 2019-78631 A (SHARP CORPORATION) 23 May 2019 (2019-05-23)<br>entire text, all drawings | 1-15 |
| A | JP 2021-71471 A (TATEYAMA KAGAKU COMPANY, LIMITED) 06 May 2021<br>(2021-05-06)<br>entire text, all drawings | 1-15 |
| A | US 2020/0379114 A1 (TSINGHUA UNIVERSITY) 03 December 2020 (2020-12-03)<br>entire text, all drawings | 1-15 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

34

**Information on patent family members**

International application No.

**PCT/JP2023/015417**

| Patent document cited in search report | | | Publication date (day/month/year) | Patent family member(s) | | | Publication date (day/month/year) |
|---|---|---|---|---|---|---|---|
| JP | 2019-82405 | A | 30 May 2019 | (Family: none) | | | |
| JP | 2019-78631 | A | 23 May 2019 | US | 2019/0120943 | A1 | |
| | | | | entire text, all drawings | | | |
| | | | | CN | 109696683 | A | |
| JP | 2021-71471 | A | 06 May 2021 | WO | 2021/079559 | A1 | |
| | | | | entire text, all drawings | | | |
| | | | | TW | 202131015 | A | |
| US | 2020/0379114 | A1 | 03 December 2020 | WO | 2019/024370 | A1 | |
| | | | | entire text, all drawings | | | |
| | | | | CN | 107219533 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018091630 A